# EUROPEAN PATENT APPLICATION

(11) **EP 2 481 857 A2**
(43) Date of publication of application: **01.08.2012**
(21) Application number: 12396001.5
(22) Date of filing: 26.01.2012
(51) Int. Cl.: E03F 5/04

(54) **Method for manufacturing a heightened model for a floor well and a floor well**

(30) Priority: 26.01.2011 FI 20110020
(71) Applicant: Meriser OY, 29900 Merikarvia (FI)
(72) Inventor: Kuusinen, Hannu, 29900 Merikarvia (FI)
(74) Representative: Nieminen, Taisto Tapani

(57) **Abstract**

Method for manufacturing a basic model (1) of a floor drain and a heightened model (1') derived from the mentioned basic model (1) in which case the basic model (1) of the floor drain or the body forming its main part is made of plastic by casting using a casting mould. In the heightened model (1') the heightened part is formed to be a heightening (10) of the edge (2) of the orifice of the floor drain by changing the part of the casting mould forming the orifice (2) of the casting mould into another part of the casting mould with which part a heightened orifice (10) can be created in which case the altitudes (h3) and (h4) of the input pipe fitting (3) and the output pipe fitting (5) of the floor drain can be lowered in relation to the upper edge of the orifice (10) of the floor drain.

## Description

The invention relates to a method for manufacturing a basic model of a floor drain and a heightened model derived from the mentioned basic model in which case,the basic model of the floor drain or its body forming the main part is made of plastic by casting using a casting mould.

Floor drains made of plastic by injection moulding are previously known at the upper part of the body of which floor drains there is an orifice with edges in order to receive the water streaming on the floor. The orifice is cylindrical and its edge height is fairly accurately such what is determined by the structures coming inside the edge, such as a seal, clamping ring and lid. In a new structure the aim is to install the floor drains at the right height by evaluating or by measuring, the surface height of a floor located at the drain and equipped with tilts. If other drain lines are additionally brought to the floor drain also in flank with the help of pipings, the floor drain must often be installed lower than the desired altitude so that a needed slope can be arranged to the drain lines coming to the drain. In these cases a heightening ring must be attached to the floor drains so that the upper edge of the orifice can be arranged at the level of the floor to which level a seal flange directing water from underneath the mat or a tiling is installed.

It is very usual to install the heightening ring in the floor drains. The heightening ring is cut to have the right height, is installed at the orifice of the floor drain and the installation is ensured with various attachment ways. When the orifice of the floor drain has a fairly low edge height, the installations of the heightening ring easily become leaky. The heightening ring may have a tilted position or it stays too up. It can also rise upwards later or the floor drain for its part can move downwards in the structures in which case the heightening ring does not extend till the seal. Also the seal can be damaged or may even roll downwards away from its groove during the installation of the heightening ring.

A new, heightened floor drain model is developed in order to eliminate the above mentioned disadvantages caused by a detached heightening ring which can be installed to the floor drain and a method in order to manufacture it is developed by utilizing the mould or moulds of the basic model of the floor drain. Characteristics for this invention is what is presented in the characterizing parts of the claims 1 and 4.

When one manufactures the floor drain model which is heightened according to the invention, a huge advantage can be achieved regarding the mould costs when the casting mould can largely be the same as what is used in order to manufacture the floor drain according to the basic model. Only the small mould part is changed to be another one when the heightened model is being manufactured. Regarding the heightened model there is essentially less need for the heightening ring. Further the position of the side pipe fitting of the floor drain becomes lower and there is more success with the needed slopes of the other drain lines coming to the drain. With the heightened floor drain model one can also replace the most floor drains which have been installed earlier and which required heightening rings if there will be a need for renewing the floor drain.

In the following the invention is described more detailed by referring to the accompanying drawings in which
- Figure 1: shows a side view of a known floor drain and a section view of an orifice.
- Figure 2: shows a heightened floor drain according to the invention and a section view of an orifice.
- Figure 3: shows the orifice of the floor drain of the figure 2 which has a heightened orifice as a partial section view.

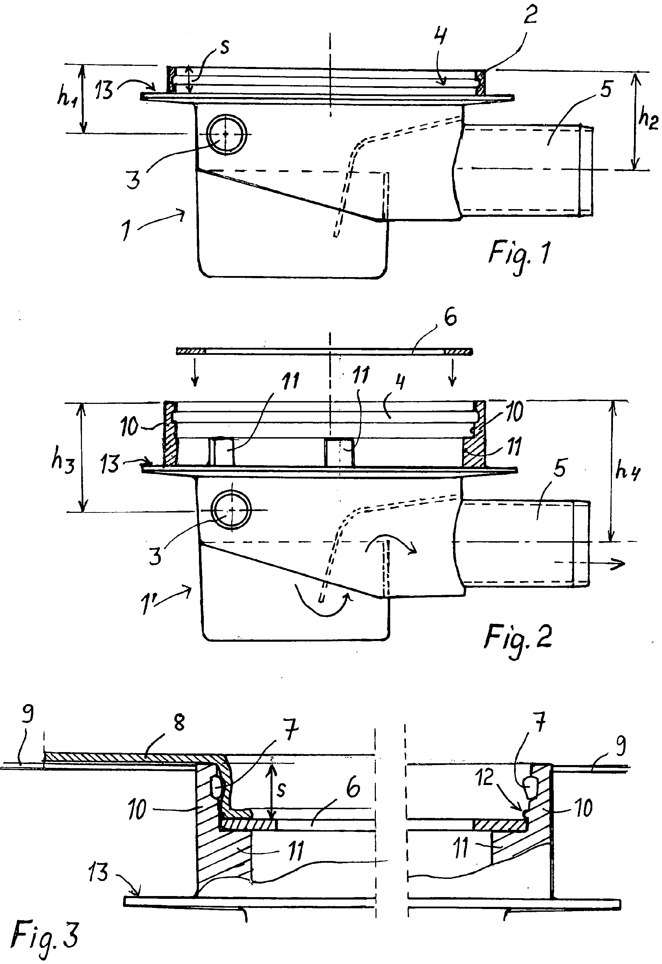

A known floor drain 1 made of plastic is shown in the figure 1 which floor drain has an orifice 2 which has a height s when the mentioned orifice 2 comprises a seal groove 4 at its inner surface. The side pipe fitting 3 is at the distance h1 from the upper edge of the orifice 2. The output pipe fitting 5 is at the distance h2 from the upper edge of the orifice 2. The body further comprises a water seal arrangement in a manner known per se.

A heightened floor drain model 1' according to the invention is shown in the figure 2 which floor drain model differs from the floor drain 1 of the figure 1 only regarding the orifice 10. When the floor drain 1' is being manufactured the casting mould part creating the orifice is changed to a mould part creating the orifice of the floor drain of the figure 1 so that the height of the orifice 10 has approximately doubled itself compared to the height s of the orifice 2 of the floor drain of the figure 1. For example the upper surface of the flange 13 functions advantageously as the barrier layer of the mould part to be changed. The outer surface of the cylinder part of the orifice 10 has stayed as a cylinder surface. Instead, inside the orifice 10 several supports 11 are formed on the inner surface of the orifice 10 due to a changed mould part, further the seal groove 4 is ,by the upper edge such as in the figure 1. The side pipe fitting 3 is located at a distance h3 downwards from the upper edge of the orifice 10. Analogously the output pipe fitting 5 is located at a distance h4 downwards from the upper edge of the orifice 10. The heightening of the orifice 10 lowers the position of the pipe fittings 3 and 5 approximately 20 mm during the installation. The heightening degree can of course be greater, too. Especially the lowering of the location of the pipe fitting 3 brings significant advantages regarding the arrangement of the drain line for example from a dry drain located at a distance of 2 - 3 metres in which case it is possible to arrange more surely the needed slope regarding this drain line. In the floor drain the location of the side pipe fittings 3 must be above the water level determined by the release height of the water seal located in the drain.

Supports 11 are needed to support the ring 6 which can be installed to be a installation base which ring is located to be resting on the supports 11 and is located at a height determined by them. The supports 11 are at a distance from each other, for example 6 pieces at a circle. The supports 11 cannot be formed to be a solid edge because the edge cannot be lightened from below with the help of a mould technique and on the other hand a solid support for its part would cause an excessive matter concentration in other words a too thick wall for the edge compared to the other walls.

The orifice 10 which heightens the floor drain is shown in the figure 3 as a section view so that there are supports 11 in the both section views. The ring 6 is installed at its place. Small protrusions 12 make sure that it stays at its place over which protrusions the ring 6 is pushed. A seal 7 at the groove of the orifice and a seal flange 8 are shown in the figure 3 which seal flange is installed to be the lowest wet seal structure in order to direct the drainage water which has gone underneath the floor coating into the drain. There will be a wet seal on top of the seal flange 8 and on top of it there will be a mat or a tiling. The upper edge of the orifice 10 of the floor drain 1' is adjusted at the level of the upper surface 9 of the floor structure so that the seal flange 8 which recedes slightly towards the drain 1' directs the running of the water into the drain.

## Claims

1. Method for manufacturing a basic model (1) of a floor drain and a heightened model (1') derived from the mentioned basic model (1) in which case the basic model (1) of the floor drain or the body forming its main part is made of plastic by casting using a casting mould, **characterized in that** in the heightened model (1') the heightened part is formed to be a heightening (10) of the edge (2) of the orifice of the floor drain by changing the part of the casting mould forming the orifice (2) of the casting mould into another part of the casting mould with which part a heightened orifice (10) can be created in which case the altitudes (h3) and (h4) of the input pipe fitting (3) and the output pipe fitting (5) of the floor drain can be lowered in relation to the upper edge of the orifice (10) of the floor drain.

2. Method according to the claim 1, **characterized in that** the part of the casting mould creating the heightened orifice (10) is adjusted to create supports (11) for the supporting ring (6) inside the orifice (10), to the wall of the orifice.

3. Method according to the claim 2, **characterized in that** the altitude of the upper surface of the supporting ring (6) from the upper surface of the orifice (10) (distance s) is adjusted in the heightened model (1') to be essentially the same as the corresponding distance (s) in the basic model (1) with the help of the formed supports (11).

4. Heightened floor drain (1') which is manufactured according to the method of the claim 1, **characterized in that** the height of the orifice (10) of the floor drain (1') is double or more compared to the height (s) which is required by the structure of the orifice and the parts which are to be installed to it.

5. Floor drain (1') according to the claim 4, **characterized in that** the distances (h3) and (h4) of the input pipe fitting (3) and the output pipe fitting (5) of the floor drain (1') from the upper edge of the orifice (10) are adjusted to be greater than in the basic model (1) wherein with the heightened model (1') the basic model (1) which is already installed or meant to be installed and into it installed or to be installed detached heightening ring can be replaced.
